# EUROPÄISCHE PATENTSCHRIFT

(11) **EP 3 786 037 B1**
(45) Veröffentlichungstag und Bekanntmachung des Hinweises auf die Patenterteilung: **06.05.2026**
(21) Anmeldenummer: 20193388.4
(22) Anmeldetag: 28.08.2020
(51) Int. Cl.: B62H 3/02, B62K 3/00, B62H 3/00

(54) **VERWENDUNG EINER PARKVORRICHTUNG MIT EINER ABSTELLVORRICHTUNG FÜR ROLLER**
USE OF A PARKING DEVICE WITH A SUPPORT DEVICE FOR SCOOTERS
UTILISATION D'UN DISPOSITIF DE STATIONNEMENT AVEC UN DISPOSITIF DE STATIONNEMENT POUR TROTTINETTE

(30) Priorität: 30.08.2019 AT 507592019
(43) Veröffentlichungstag der Anmeldung: 03.03.2021
(73) Patentinhaber: Grübl, Nathanael, 6095 Grinzens (AT)
(72) Erfinder: Grübl, Nathanael, 6095 Grinzens (AT)
(74) Vertreter: Torggler & Hofmann Patentanwälte - Innsbruck

(56) Entgegenhaltungen:
- EP-A1- 2 937 268
- WO-A1-2017/217929
- AT-U1- 4 448
- AT-U1- 4 449
- DE-U1- 202009 000 780
- DE-U1- 29 505 264
- KR-U- 19980 043 436
- US-A1- 2016 311 334

## Beschreibung

Die Erfindung betrifft eine Verwendung einer Abstellvorrichtung für Roller, welche ein, zwischen einem Lenker und einer Gabel angeordnetes Steuerrohr aufweisen, wobei die Abstellvorrichtung eine, eine Längserstreckung aufweisende Trägervorrichtung zur Befestigung der Abstellvorrichtung und eine Haltevorrichtung mit Ausnehmungen aufweist, in die die Steuerrohre der Roller anordenbar sind.

Roller, die auch als Scooter bekannt sind, sind ein immer beliebter werdendes Fortbewegungsmittel, welches insbesondere innerhalb von Städten seine Vorzüge ausspielt. Dies gilt insbesondere für Elektroroller, die auch als E-Scooter bekannt sind, die gemietet und dann an beliebigen Stellen innerhalb einer Stadt abgestellt und zum Aufladen vom Vermieter abgeholt werden. Dabei hat sich als Problem herausgestellt, dass die Roller, insbesondere die Elektroroller, nicht an vorgegebenen Parkvorrichtungen oder Abstellvorrichtungen abgestellt werden, sondern häufig einfach achtlos liegen gelassen werden. Abgesehen vom unschönen Stadtbild stellen einfach liegen gelassene Roller in Hindernis für Fußgänger dar.

Um dieses Problem zu lösen, sind im Stand der Technik bereits Abstellvorrichtungen und Parkvorrichtungen für Roller bekannt. So zeigt beispielsweise die DK 178 287 B1 eine Abstellvorrichtung, die an einer Gebäudewand befestigt wird. Eine horizontal angeordnete erste Haltevorrichtung weist Ausnehmungen auf, in die die Steuerrohre der Roller, die sich zwischen dem Lenker und der Gabel erstrecken, angeordnet werden. Eine zweite, ebenfalls horizontal angeordnete Haltevorrichtung weist ebenfalls Ausnehmungen auf, in welche die Vorderräder der Roller angeordnet werden. Diese Abstellvorrichtung hat mehrere Nachteile. Damit mehrere platzsparend nebeneinander abgestellt werden können, müssen die Lenker verdreht werden. Zudem müssen die Vorderräder in die Ausnehmungen der zweiten Haltevorrichtung hineingehoben werden, was insbesondere bei den schweren Elektrorollern unhandlich ist.

Die gattungsgemäße WO2017/217929 zeigt verschiedene Parkvorrichtungen für Roller, wobei für Roller mit falt- oder verschwenkbaren Steuerrohren für jeden einzelnen Roller eine gesonderte Abstellvorrichtung vorgesehen ist, die mit einem schrägen Winkel zur Rückwand einer Bushaltestelle angeordnet werden, damit ein Durchgang für Spaziergänger frei bleibt. Diese Abstellvorrichtungen weisen einen extrem hohen Platzbedarf auf, sodass ebenfalls vorgeschlagen wird, die einzelnen Roller übereinander an Befestigungsvorrichtung an einer Wand zu platzieren. Insbesondere für E- Scooter ist dies aber aufgrund ihrer Masse ungünstig.

Weiterer Stand der Technik, der sich mit dem Abstellen verschiedener Fahrzeuge beschäftigt, geht aus der US 2016/311334 A1, der DE 29505264 U1, der AT 4448 U1, der EP 2937268 A1, der AT 4449 U1, der DE 202009000780 U1 sowie der KR 19980043436 U hervor.

Die vorliegende Erfindung stellt sich die Aufgabe, die obigen Nachteile zu vermeiden und eine einfach handhabbare und platzsparende Möglichkeit bietet, Roller abzustellen.

Diese Aufgabe wird durch eine Verwendung einer Abstellvorrichtung mit den Merkmalen des Anspruchs 1 gelöst.

Roller zeichnen sich dadurch aus, dass sie ein klein dimensioniertes Vorder- und Hinterrad aufweisen, zwischen denen ein horizontales Trittbrett angeordnet ist. Das Vorderrad ist über eine Gabel und ein langes, beinahe vertikal angeordnetes Steuerrohr mit dem Lenker verbunden. Bei E-Rollern sind diese Steuerrohre im Vergleich zu herkömmlichen Rollern deutlich massiver ausgebildet.

Die Abstellvorrichtung weist eine, eine Längserstreckung aufweisende, Trägervorrichtung auf. Über die Trägervorrichtung ist die Abstellvorrichtung an einer Gebäudewand oder einem oder an mehreren Stehelementen befestigbar. Bevorzugt ist die Längserstreckung der Trägervorrichtung im Montagezustand horizontal ausgerichtet. **In** einer Haltevorrichtung sind, eine Vielzahl von, Ausnehmungen angeordnet, in denen die Steuerrohre der Roller zum Abstellen anordenbar sind, wobei die Haltevorrichtung auch integraler Bestandteil der Trägervorrichtung sein kann. Die Ausnehmungen weisen dabei eine Längserstreckung auf, wobei im Montagezustand der Abstellvorrichtung der kleinere Winkel zwischen der Längserstreckung der Ausnehmung und der Längserstreckung der Trägervorrichtung spitz ist.

Dadurch ist zum einen ein besonders platzsparendes Abstellen einer Vielzahl von Rollern nebeneinander möglich. Darüber hinaus können die Roller besonders einfach in einer solchen Abstellvorrichtung abgestellt werden. Infolge der Anordnung der Ausnehmungen werden die Roller nämlich erfindungsgemäß abgestellt, indem die Roller in einer Richtung schräg zur Längserstreckung der Trägervorrichtung zu den Ausnehmungen hinbewegt werden. Anschließend werden die Steuerrohre um eine horizontal angeordnete Drehachse in die Ausnehmungen gekippt. Es genügt, wenn die Roller in Bezug auf die Trägervorrichtung schräg zur Abstellvorrichtung hinbewegt werden. **In** einem passenden Abstand werden die Roller dann gestoppt und das Steuerrohr in eine der Ausnehmungen hineingekippt.

Das Entfernen der Roller erfolgt bevorzugt umgekehrt. Zuerst werden die Steuerrohre um eine horizontal angeordnete Drehachse aus den Ausnehmungen herausgekippt. Anschließend werden die Roller in einer in Bezug auf die Längserstreckung der Trägervorrichtung schrägen Richtung von den Ausnehmungen wegbewegt.

Eine Parkvorrichtung weist eine an einer Gebäudewand oder einem Stehelement befestigte Trägervorrichtung auf. Die Trägervorrichtung weist eine Längsausstreckung auf, die bevorzugt horizontal ausgerichtet ist. Weiters ist an der Trägervorrichtung eine Haltevorrichtung angeordnet, wobei die Haltevorrichtung auch integraler Bestandteil der Trägervorrichtung sein kann. Die Haltevorrichtung weist eine Vielzahl von Ausnehmungen zur Anordnung der Steuerrohre der Roller auf. Dabei sind die Ausnehmungen derart ausgestaltet, dass die Steuerrohre der Roller in den Ausnehmungen anordenbar sind, indem die Roller in einer Richtung schräg zur Längserstreckung der Trägervorrichtung zu den Ausnehmungen hinbewegt werden. Anschließend werden die Steuerrohre um eine horizontal angeordnete Drehachse in die Ausnehmungen gekippt.

Dadurch stellt eine Parkvorrichtung ebenfalls eine äußerst einfach handhabbare Parkmöglichkeit für Roller zur Verfügung. Es genügt, wenn die Roller in Bezug auf die Trägervorrichtung schräg zur Parkvorrichtung hinbewegt werden. **In** einem passenden Abstand werden die Roller dann gestoppt und das Steuerrohr in eine der Ausnehmungen hineingekippt. Das Entfernen von der Parkvorrichtung erfolgt bevorzugt umgekehrt. Zuerst werden die Steuerrohre um eine horizontal angeordnete Drehachse aus den Ausnehmungen herausgekippt. Anschließend werden die Roller in einer in Bezug auf die Längserstreckung der Trägervorrichtung schrägen Richtung von den Ausnehmungen wegbewegt.

Die Längserstreckung der Roller ist definiert durch deren Längsachse, die das Vorderrad mit dem Hinterrad verbindet. In geparktem Zustand in der Parkvorrichtung und in abgestelltem Zustand in der Abstellvorrichtung ist die Längserstreckung der Roller schräg zur Längserstreckung der Trägervorrichtung ausgerichtet. Sind eine Vielzahl von Roller in einer erfindungsgemäßen Parkvorrichtung oder einer erfindungsgemäßen Abstellvorrichtung geparkt beziehungsweise abgestellt, ist dadurch ein platzsparendes Parken beziehungsweise Abstellen möglich, wobei zusätzlich die geparkten und abgestellten Roller aufgrund der schrägen Ausrichtung der Längserstreckung nicht besonders weit von der Trägervorrichtung abstehen. Zudem ist es nicht notwendig, die Lenker der Roller für das Parken oder Abstellen zu drehen.

Insbesondere kann eine erfindungsgemäße Abstellvorrichtung in einer Parkvorrichtung integriert sein, da eine derartige Abstellvorrichtung eine wie oben beschriebene Parkvorrichtung mit der vorteilhaften Art des Abstellens der Roller ermöglicht.

In einer bevorzugten Ausführungsform der Abstellvorrichtung und der Parkvorrichtung ist der Raum unterhalb der Trägervorrichtung als Freiraum ausgebildet. In diesem Fall ist es nicht notwendig, das bei Elektrorollern schwere Vorderrad zum Abstellen hochzuheben.

Um diese Möglichkeit des Abstellens zu bewirken, müssen die Ausnehmungen besonders ausgestaltet sein. Eine Möglichkeit besteht darin, dass die Ausnehmungen eine Längserstreckung aufweisen, die ebenfalls in Bezug auf die Längserstreckung der Trägervorrichtung ausgerichtet ist. In einem solchen Fall werden die Roller in einer Richtung zu den Ausnehmungen hinbewegt, die ungefähr orthogonal zur Längserstreckung der Ausnehmungen ausgerichtet ist. Darüber hinaus sind auch flächige, beispielsweise rechteckige, Ausnehmungen denkbar, wobei eine kleinere Öffnung ein Hineinkippen und Halten des Steuerrohrs ermöglicht.

Weitere vorteilhafte Ausführungen der Erfindung sind in den abhängigen Ansprüchen definiert.

In einer Ausführungsform der Erfindung liegt der Winkel α zwischen der Längserstreckung der Ausnehmung und der Längserstreckung der Trägervorrichtung zwischen 20° und 70°. Als vorteilhaft hat es sich dabei erwiesen, wenn der Winkel α zwischen 30° und 60° liegt. Besonders vorteilhaft hat es sich erwiesen, wenn der Winkel α zwischen 40° und 50° liegt. Dadurch ermöglicht man eine besonders platzsparende Anordnung der Roller.

Gemäß einer weiteren Ausführungsform der Erfindung ist die Haltevorrichtung als integraler Teil der Trägervorrichtung ausgebildet.

Gemäß einer weiteren Ausführungsform der Erfindung weist die Haltevorrichtung eine Vielzahl von Halteelementen auf. Dadurch lassen sich mehrere Roller in den Ausnehmungen zwischen den Halteelementen anordnen. Die Ausnehmungen der Haltevorrichtung werden durch den Bereich zwischen den Seitenwänden benachbarter Halteelemente gebildet.

**In** einer Ausführungsform der Erfindung sind die Halteelemente im äußeren Bereich der Ausnehmung abgerundet oder in Form von polygonalen Flächen, die eine Abrundung annähern, ausgebildet. Dies erleichtert das Einführen oder das Herausnehmen von Rollern in oder aus den Ausnehmungen. Allerdings sind auch alternative Ausführungsformen für die Halteelemente möglich, wie beispielsweise stangenförmige Halteelemente.

**In** einer weiteren Ausführungsform der Erfindung sind die Halteelemente plattenförmig ausgebildet. Als besonders vorteilhaft hat es sich dabei herausgestellt, wenn die Halteelemente in Draufsicht im Wesentlichen rautenförmig ausgebildet sind. Dadurch ergibt sich ein vorteilhafter Winkel zwischen der Längserstreckung der Ausnehmung und der Längserstreckung der Trägervorrichtung und das platzsparende Anordnen der Roller ist besonders einfach möglich. Es sind auch alternative Formen für das Halteelement in Draufsicht möglich, wie beispielsweise ein trapez- oder L-förmiges Halteelement.

**In** einer Ausführungsform der Erfindung sind die Halteelemente entlang der Längsstreckung (LT) der Trägervorrichtung verschiebbar gelagert, wodurch die Quererstreckung (QA) der Ausnehmung veränderbar ist. **In** diesem Fall lassen sich die Ausnehmungen flexibel an die unterschiedlichen Größen von Rollern oder E-Roller anpassen. Die Anpassung der Trägervorrichtung kann mithilfe einer Befestigungsvorrichtung eines Halteelementes befestigt werden. Eine Befestigungsvorrichtung wäre beispielsweise eine Schraube die in einer Ausnehmung des Halteelementes angeordnet ist und die das Halteelement durch Andrücken an die Trägervorrichtung fixiert. Durch eine Lockerung der Schraube wird die Haltevorrichtung nicht mehr so stark an die Trägervorrichtung gedrückt und lässt sich entlang der Längserstreckung (LT) der Trägervorrichtung bewegen und erneut fixieren.

**In** einer weiteren Ausführungsform der Erfindung weist die Haltevorrichtung im Bereich der oder in den Ausnehmungen Anschlagelemente auf. Diese Anschlagelemente dienen zum formschlüssigen und/oder kraftschlüssigen Halten des Steuerrohrs.

**In** einer weiteren Ausführungsform der Erfindung sind die Anschlagelemente zapfenförmig ausgebildet. Dies verbessert ihre Funktion zum formschlüssigen und/oder kraftschlüssigen Halten. Allerdings wären auch alternative Formen für die Anschlagelemente möglich, wie beispielsweise kreis- oder kugelförmige Anschlagelemente.

Weiters kann vorgesehen sein, dass die Anschlagelemente im montierten Zustand der Abstellvorrichtung relativ zur Vertikalen in einem Winkel β zwischen 5° und 30° angeordnet sind. Als besonders vorteilhaft hat es sich erwiesen, wenn der Winkel β zwischen 10° und 20° liegt.

**In** einer weiteren Ausführungsform der Erfindung sind die Anschlagelemente benachbarter Halteelemente zueinander geneigt. Dadurch wird das Steuerrohr auf beiden Seiten der Ausnehmung durch die Anschlagelemente fixiert und ein unbeabsichtigtes Herauskippen des Steuerrohrs wird somit verhindert.

In einer weiteren Ausführungsform der Erfindung ragen die Anschlagelemente in einen Raum oberhalb oder unterhalb der Ausnehmung.

In einer weiteren Ausführungsform der Erfindung weisen die Anschlagelemente eine Dämpffunktion auf. Dadurch wird verhindert das, dass Steuerrohr ohne Einwirken von einer Kraft (beispielsweise durch Eigengewicht) aus der Ausnehmung kippt, da eine geringe Kraft aufgebracht werden muss um das Steuerrohr an den Anschlagelementen vorbei zu bewegen. Die Anschlagelemente sind vorzugsweise aus einem elastischen Material gebildet. Als besonders vorteilhaft hat es sich dabei herausgestellt, wenn die Anschlagelemente aus Kunststoff hergestellt werden. Allerdings sind auch alternative Materialien, mit denen eine Dämpffunktion erreicht werden kann, möglich.

Weitere Vorteile und Einzelheiten der Erfindung werden für verschiedene Ausführungsbeispiele anhand der folgenden Figuren diskutiert. Dabei zeigt:
- Fig. 1a, 1b: eine schematische Ansicht unterschiedlicher Montageformen der Parkvorrichtung von vorne,
- Fig. 2: eine schematische Ansicht von oben,
- Fig. 3: eine Ansicht von oben auf abgerundete- oder polygonale Halteelemente,
- Fig. 4: eine Haltevorrichtung als integraler Teil der Trägervorrichtung,
- Fig. 5: eine alternative Ausführungsformen der Parkvorrichtung,
- Fig. 6a, 6b: verschiedene Darstellungen einer mit der Abstellvorrichtung ausgestatteten Parkvorrichtung mit Rollern die in den Ausnehmungen angeordnet sind,
- Fig. 7: eine Ansicht von vorne auf die Halteelemente und auf die Anschlagelemente welche dazwischen angeordnet sind, und
- Fig. 8: eine Ansicht von oben auf die Halteelemente und auf die Anschlagelemente welche dazwischen angeordnet sind.

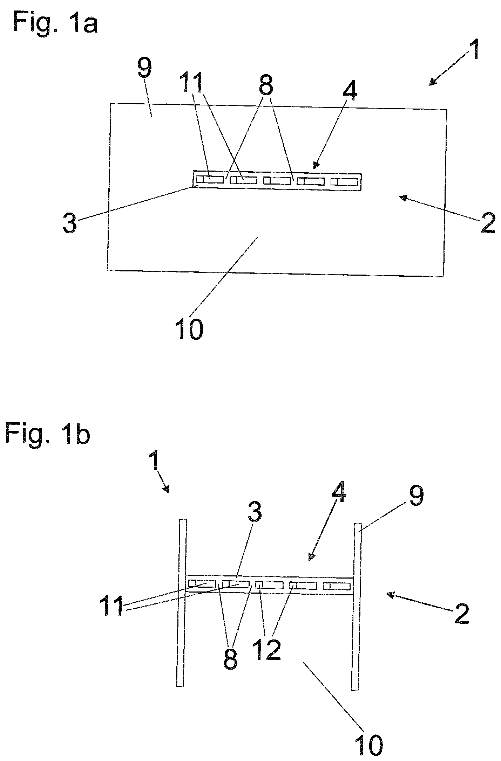

Die Fig. 1a zeigt ein Ausführungsbeispiel einer Abstellvorrichtung 2, die in einer Parkvorrichtung 1 integriert ist, wobei die Abstellvorrichtung 2 eine an einer Gebäudewand 9 befestigte Trägervorrichtung 3 aufweist. Die Trägervorrichtung 3 weist eine Haltevorrichtung 4 auf, wobei die Haltevorrichtung 4 eine Vielzahl von Ausnehmungen 8 zur Anordnung der Steuerrohre 6 der Roller 5 aufweist. Die Haltevorrichtung 4 weist ebenfalls eine Vielzahl von Halteelementen 11 auf, wobei die Ausnehmungen 8 durch den Bereich zwischen den Seitenwänden 12 benachbarter Halteelemente 11 gebildet werden. Der Raum unterhalb der Trägervorrichtung 3 ist als Freiraum 10 ausgebildet.

Die Fig. 1b zeigt ein weiteres Ausführungsbeispiel einer Parkvorrichtung 1 mit einer erfindungsgemäßen Abstellvorrichtung 2. Die Abstellvorrichtung 2 weist dabei eine an einem Stehelement 9 befestigte Trägervorrichtung 3 auf. An der Trägervorrichtung 3 ist eine Haltevorrichtung 4 entlang einer Längserstreckung LT angeordnet, wobei die Haltevorrichtung 4 eine Vielzahl von Ausnehmungen 8 zur Anordnung von Steuerrohre 6 der Roller 5 aufweist. Dabei sind die Ausnehmungen 8 derart ausgestaltet, dass die Steuerrohre 6 der Roller 5 in den Ausnehmungen 8 anordenbar sind, indem die Roller 5 in eine Richtung schräg zur Längserstreckung LT der Trägervorrichtung 3 zu den Ausnehmungen 8 hinbewegt werden und die Steuerrohre 6 um eine horizontal angeordnete Drehachse Da in die Ausnehmungen 8 gekippt werden.

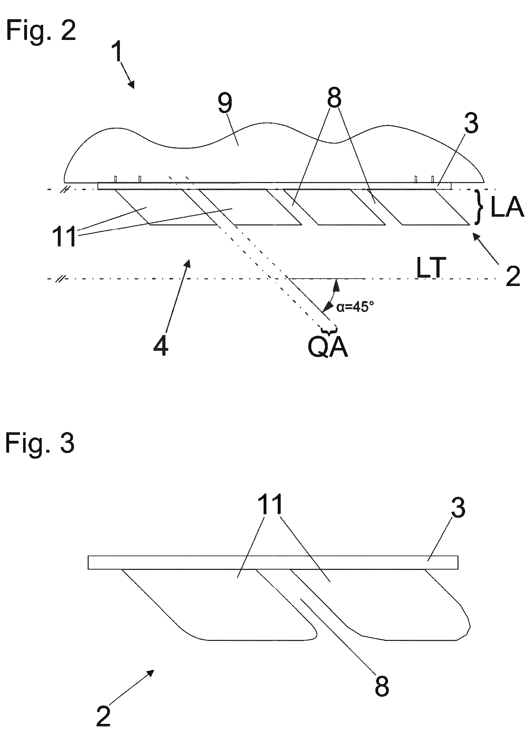

Die Fig. 2 zeigt eine Darstellung einer Abstellvorrichtung 2 für eine Parkvorrichtung 1 in einer Ansicht von oben. Die Abstellvorrichtung 2 umfasst eine Trägervorrichtung, die eine Längserstreckung LT aufweist, über die die Abstellvorrichtung 2 beispielsweise an einer Gebäudewand oder einem Stehelement 9 befestigbar ist. An der Trägervorrichtung 3 ist eine Haltevorrichtung 4 angeordnet, wobei die Haltevorrichtung 4 Ausnehmungen 8 aufweist, in die Steuerrohre 6 von den Roller 5 anordenbar sind. Die Haltevorrichtung 4 wird durch eine Vielzahl von Halteelementen 11 ausgebildet.

Die Ausnehmungen 8 weisen eine Längserstreckung LA auf, die im Montagezustand der Abstellvorrichtung 2 einen spitzen Winkel α zur Längserstreckung LT der Trägervorrichtung 3 einnimmt.

Die Fig. 3 zeigt eine Darstellung der Halteelemente 11 einer Abstellvorrichtung 2 in einer Ansicht von oben. Dabei sind die Halteelemente 11 plattenförmig ausgebildet und der äußere Bereich der Ausnehmungen ist abgerundet oder in Form von polygonalen Flächen ausgebildet. In der Figur ist links ein Halteelement 11 mit runden äußeren Ecken dargestellt und rechts ein Halteelement 11 mit polygonalen äußeren Ecken. Zwischen den Halteelementen 11 ist eine Ausnehmung 8 ausgebildet. Die Halteelemente 11 der Haltevorrichtung 4 sind an der Trägervorrichtung 3 angeordnet.

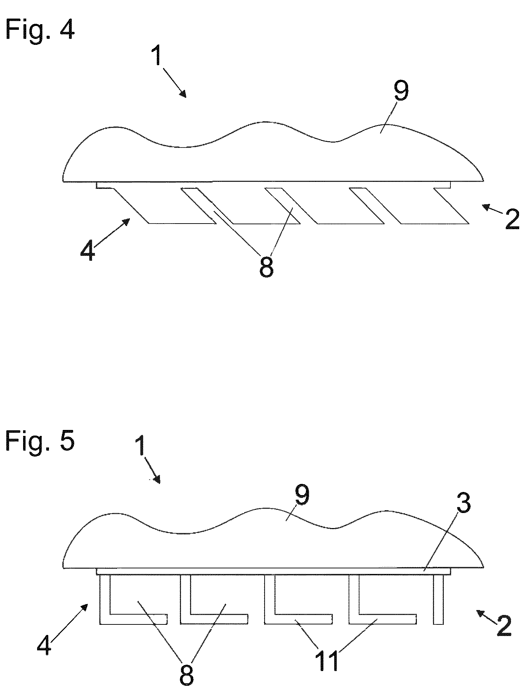

Die Fig. 4 zeigt eine Abstellvorrichtung 2, umfassend eine Trägervorrichtung 3, wobei die Haltevorrichtung 4 als integraler Teil der Trägervorrichtung 3 ausgebildet ist, und wobei zwischen den Halteelementen 11 der Haltevorrichtung 4 die Ausnehmungen 8 ausgebildet werden.

Die Fig. 5 zeigt eine alternative Ausführungsform der Parkvorrichtung 1, wobei die Parkvorrichtung 1 eine alternative, nicht erfindungsgemäße Abstellvorrichtung 2 umfasst, welche eine Trägervorrichtung 3 aufweist, die an einer Gebäudewand oder einem Stehelement 9 angeordnet ist. Die Halteelemente 11 der Haltevorrichtung 4 sind dabei L-förmig ausgebildet. Die Ausnehmungen 8 werden dabei durch den Bereich zwischen den Seitenwänden 12 der Halteelemente 4 gebildet.

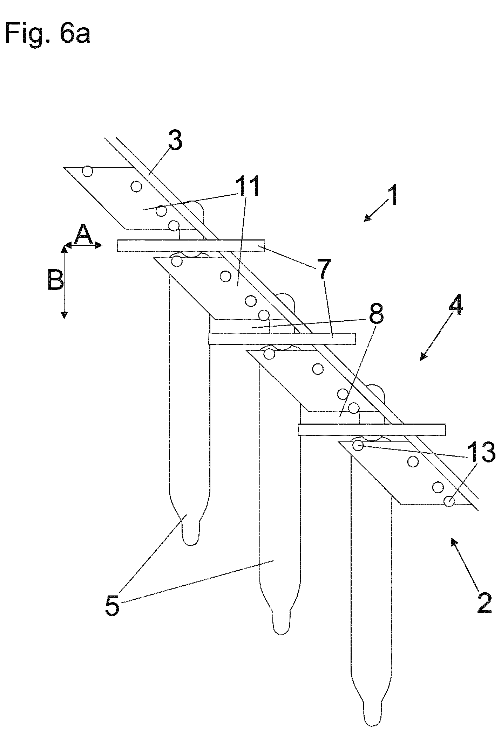

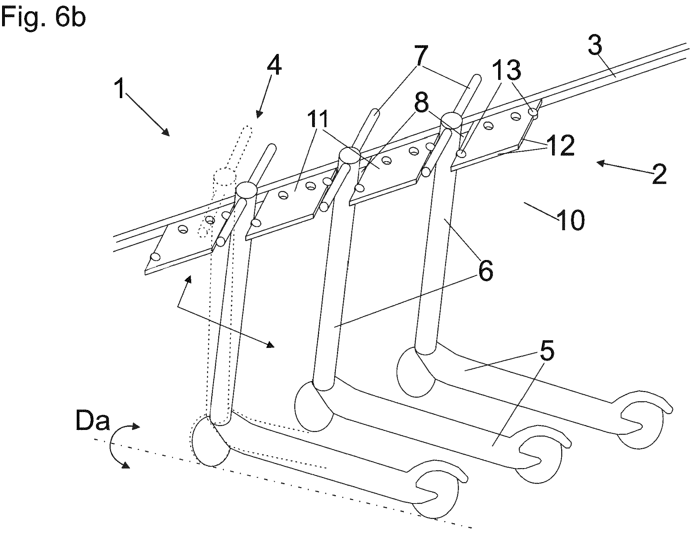

Die Figuren 6a und 6b zeigen eine in einer Parkvorrichtung 1 integrierte Abstellvorrichtung 2, umfassend eine Trägervorrichtung 3, an der eine Haltevorrichtung 4 angeordnet ist. Die Haltevorrichtung 4 weist eine Vielzahl von Halteelementen 11 auf. Dabei bilden die Halteelemente 11 eine Vielzahl von Ausnehmungen 8 aus. In den Ausnehmungen 8 werden die Steuerrohre 6 der Roller 5 angeordnet, indem die Roller 5 erfindungsgemäß, in eine Richtung schräg zur Längserstreckung LT (in Richtung von Pfeil B) der Trägervorrichtung 3, zu den Ausnehmungen 8 hin bewegt werden und die Steuerrohre 6 um eine horizontal angeordnete Drehachse Da in die Ausnehmungen 8 gekippt werden (in Richtung von Pfeil A). An den Halteelementen 11 sind im Bereich der Ausnehmungen 8 Anschlagelemente 13 zum formschlüssigen und/oder kraftschlüssigen Halten des Steuerrohrs 6 angeordnet, dabei sind diese Anschlagelemente zapfenförmig ausgebildet. Bei den Figuren 6a und 6b handelt es sich um schematische Darstellungen, wobei aufgrund der Darstellung der Eindruck erweckt, wird, dass die Lenker 7 an den der Trägervorrichtung 3 hängen. Dies ist aber nicht der Fall. Die Vorderräder der Roller 5 bleiben am Boden. Die Fixierung durch die Anschlagelemente 13 ist ausreichend. Insbesondere ist es nicht notwendig, eine zusätzliche Halterung im Bereich der Vorderräder vorzusehen.

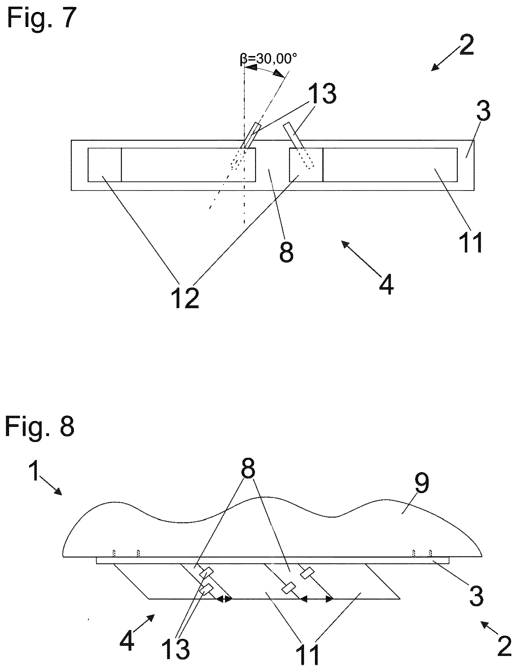

Die Fig. 7 zeigt eine Ausführungsform der in einer Parkvorrichtung 1 integrierte Abstellvorrichtung 2, umfassend eine Trägervorrichtung 3, an der eine Haltevorrichtung 4 angeordnet ist. Die Haltevorrichtung 4 besteht aus einer Vielzahl von Halteelementen 11, die Ausnehmung 8 wird durch den Bereich zwischen den Seitenwänden 12 der Halteelemente 11 gebildet. In dem äußeren Bereich der die Ausnehmung 8 sind Anschlagelemente 13 zum formschlüssigen und/oder kraftschlüssigen Halten des Steuerrohrs 6 angeordnet, wobei die Anschlagelemente 13 zapfenförmig ausgebildet sind. Die Anschlagelemente 13 ragen dabei in einen Raum oberhalb der Halteelemente 11. Die Anschlagelemente 13 sind im montierten Zustand der Abstellvorrichtung 2 relativ zur Vertikalen in einem Winkel β zwischen 5° und 30° angeordnet. Als besonders vorteilhaft hat es sich erwiesen, wenn der Winkel β zwischen 10° und 20° beträgt.

Die Fig. 8 zeigt eine Darstellung einer Ausführungsform der Abstellvorrichtung 2 für eine Parkvorrichtung 1 von oben. Die Abstellvorrichtung 2 umfasst eine Haltevorrichtung 4, die über eine Trägervorrichtung 3 an einer Gebäudewand oder einem Stehelement 9 angeordnet ist. Dabei weist die Haltevorrichtung 4 eine Vielzahl von Halteelementen 11 auf. Die Halteelemente 11 sind plattenförmig ausgebildet und insbesondere in Draufsicht im Wesentlichen rautenförmig ausgebildet. Die Anschlagelemente 13 sind in einem Bereich zwischen den Halteelementen 11 zum formschlüssigen und/oder kraftschlüssigen Halten des Steuerrohrs 6 angeordnet. Die Anschlagelemente 13 weisen dabei eine dämpfende Funktion auf und sind vorzugsweise aus einem elastischen Material, vorzugsweise Kunststoff, gebildet. Die Halteelemente 11 entlang der Längserstreckung LT der Trägervorrichtung 3 sind verschiebbar gelagert, wodurch die Quererstreckung QA der Ausnehmungen 8 veränderbar ist.

**In** einigen der obigen Figuren ist die Trägervorrichtung 3 direkt an der Gebäudewand 9 befestigt. Es kann aber generell bevorzugt vorgesehen sein, dass die Trägervorrichtung 3 Tragestreben aufweist, die beispielsweise senkrecht zur Längserstreckung LT der Trägervorrichtung 3 angeordnet sind. Die Tragestreben werden dann an der Gebäudewand 9 befestigt. Dadurch sind die Trägervorrichtung 3 und die Ausnehmungen 8 in einem gewissen Abstand vor der Gebäudewand 9 angeordnet, wodurch sichergestellt werden kann, dass genügend Freiraum für die Lenker 7 und Vorderräder der Roller 5 verbleibt. Beispielsweise können diese Tragestreben so ausgebildet sein, dass ein Freiraum von etwa 20 cm bis 30 cm verbleibt. Zusätzliche oder alternativ können die Trägervorrichtung 3 und/oder die Ausnehmungen 8 über entsprechende Ausmaße verfügen, sodass ein ausreichender Freiraum verbleibt.

### Bezugszeichenliste:

- 1: Parkvorrichtung
- 2: Abstellvorrichtung
- 3: Trägervorrichtung
- 4: Haltevorrichtung
- 5: Roller
- 6: Steuerrohr
- 7: Lenker
- 8: Ausnehmung
- 9: Gebäudewand oder Stehelement
- 10: Freiraum
- 11: Halteelemente
- 12: Seitenwände
- 13: Anschlagelemente

- LT: Längserstreckung der Trägervorrichtung
- LA: Längserstreckung der Ausnehmung
- QA: Quererstreckung der Ausnehmung
- Da: Drehachse
- α: Winkel zwischen LA und LT
- β: Winkel für Anschlagelemente

## Patentansprüche

1. Verwendung einer Parkvorrichtung (1) mit einer Abstellvorrichtung (2) für Roller (5), welche ein zwischen einem Lenker (7) und einer Gabel angeordnetes Steuerrohr (6) aufweisen, wobei
- die Abstellvorrichtung (2) eine, eine Längserstreckung (LT) aufweisende Trägervorrichtung (3) umfasst, über die die Abstellvorrichtung (2) an einer Gebäudewand oder einem Stehelement (9) befestigt ist,
- die Abstellvorrichtung (2) eine Haltevorrichtung (4) umfasst, wobei die Haltevorrichtung (4) eine Vielzahl von Ausnehmungen (8) aufweist, in die die Steuerrohre (6) der Roller (5) anordenbar sind,
- die Ausnehmungen (8) jeweils eine Längserstreckung (LA) aufweisen,
**dadurch gekennzeichnet, dass** die Längserstreckung im Montagezustand der Abstellvorrichtung (2) einen spitzen Winkel (α) zur Längserstreckung (LT) der Trägervorrichtung (3) einnimmt, und
bei einem Verfahren zum Abstellen eines Rollers (5) in einer Parkvorrichtung (1), wobei der Roller (5) zunächst in einer Richtung schräg zur Längserstreckung (LT) der Trägervorrichtung (3) zu den Ausnehmungen (8) hin bewegt wird und anschließend das Steuerrohr (6) um eine horizontal angeordnete Drehachse (Da) in die Ausnehmungen (8) gekippt wird.

2. Verwendung nach Anspruch 1, wobei der Winkel (α) zwischen 20° und 70°, vorzugsweise zwischen 30° und 60°, ganz bevorzugt zwischen 40° und 50° liegt.

3. Verwendung nach Anspruch 1 oder 2, wobei die Haltevorrichtung (4) als integraler Teil der Trägervorrichtung (3) ausgebildet ist.

4. Verwendung nach einem der Ansprüche 1 bis 3, wobei die Haltevorrichtung (4) eine Vielzahl von Haltelementen (11) aufweist, wobei die Ausnehmung (8) durch den Bereich zwischen den Seitenwänden (12) benachbarter Halteelemente (11) gebildet wird.

5. Verwendung nach einem der Ansprüche 1 bis 4, wobei die Halteelemente (11) im äußeren Bereich der Ausnehmung (8) abgerundet sind oder in Form von polygonalen Flächen, die eine Abrundung annähern, ausgebildet sind.

6. Verwendung nach einem der Ansprüche 1 bis 5, wobei die Halteelemente (11) plattenförmig, insbesondere in Draufsicht im Wesentlichen rautenförmig, ausgebildet sind.

7. Verwendung nach einem der Ansprüche 1 bis 6, wobei die Halteelemente (11) entlang der Längserstreckung (LT) der Trägervorrichtung (3) verschiebbar gelagert sind, wobei die Quererstreckung (QA) der Ausnehmung (8) veränderbar ist.

8. Verwendung nach einem der Ansprüche 1 bis 7, wobei die Haltevorrichtung (4) im Bereich der oder in den Ausnehmungen (8) Anschlagelemente (13) zum formschlüssigen und/oder kraftschlüssigen Halten des Steuerrohrs (6) aufweist.

9. Verwendung nach Anspruch 8, wobei die Anschlagelemente (13) zapfenförmig ausgebildet sind.

10. Verwendung nach Anspruch 8 oder 9, wobei die Anschlagelemente (13) im montierten Zustand der Abstellvorrichtung (2) relativ zur Vertikalen in einen Winkel (β) zwischen 5° und 30°, vorzugsweise zwischen 10° und 20°, angeordnet sind.

11. Verwendung nach einem der Ansprüche 8 bis 10, wobei die Anschlagelemente (13) benachbarter Halteelemente (11) zueinander geneigt sind und/oder in einen Raum oberhalb oder unterhalb der Ausnehmungen (8) ragen.

12. Verwendung nach einem der Ansprüche 8 bis 11, wobei die Anschlagelemente (13) eine Dämpffunktion aufweisen, wobei die Anschlagelemente (13) vorzugsweise aus elastischem Material, vorzugsweise Kunststoff, gebildet werden.

## Claims

1. Use of a parking device (1) with a parking mechanism (2) for scooters (5) which have a head tube (6) arranged between a handlebar (7) and a fork, wherein
- the parking device (2) comprises a support device (3) having a longitudinal extension (LT), by means of which the parking device (2) is attached to a building wall or a standing element (9),
- the parking device (2) comprises a holding device (4), wherein the holding device (4) has a plurality of recesses (8) in which the steering tubes (6) of the scooters (5) can be arranged, the recesses (8) each have a longitudinal extension (LA),
**characterized in that**, when the parking device (2) is assembled, the longitudinal extension forms an acute angle (α) with the longitudinal extension (LT) of the support device (3), and
in a method for parking a roller (5) in a parking device (1), the scooter (5) is first moved in a direction oblique to the longitudinal extension (LT) of the support device (3) towards the recesses (8) and then the steering tube (6) is tilted around a horizontally arranged axis of rotation (Da) into the recesses (8) .

2. Use according to claim 1, wherein the angle (α) is between 20° and 70°, preferably between 30° and 60°, most preferably between 40° and 50°.

3. Use according to claim 1 or 2, wherein the holding device (4) is designed as an integral part of the support device (3).

4. Use according to one of claims 1 to 3, wherein the holding device (4) has a plurality of holding elements (11), wherein the recess (8) is formed by the area between the side walls (12) of adjacent holding elements (11).

5. Use according to one of claims 1 to 4, wherein the holding elements (11) are rounded in the outer region of the recess (8) or are formed in the shape of polygonal surfaces approximating a rounding.

6. Use according to one of claims 1 to 5, wherein the retaining elements (11) are plate-shaped, in particular substantially diamond-shaped when viewed from above.

7. Use according to one of claims 1 to 6, wherein the retaining elements (11) are mounted so as to be displaceable along the longitudinal extension (LT) of the support device (3), wherein the transverse extension (QA) of the recess (8) is variable.

8. Use according to one of claims 1 to 7, wherein the holding device (4) has stop elements (13) in the area of or in the recesses (8) for holding the steering tube (6) in a form-fitting and/or force-fitting manner.

9. Use according to claim 8, wherein the stop elements (13) are designed in the form of pins.

10. Use according to claim 8 or 9, wherein the stop elements (13) are arranged at an angle (β) between 5° and 30°, preferably between 10° and 20°, relative to the vertical when the parking device (2) is in the assembled state.

11. Use according to one of claims 8 to 10, wherein the stop elements (13) of adjacent retaining elements (11) are inclined towards each other and/or protrude into a space above or below the recesses (8).

12. Use according to one of claims 8 to 11, wherein the stop elements (13) have a damping function, wherein the stop elements (13) are preferably formed from elastic material, preferably plastic.

## Revendications

1. Utilisation d'un dispositif de parking (1) avec un dispositif de stationnement (2) pour scooters (5) qui présentent un tube de direction (6) disposé entre un guidon (7) et une fourche,
- le dispositif de stationnement (2) comprenant un dispositif de support (3) présentant une extension longitudinale (LT), par l'intermédiaire duquel le dispositif de stationnement (2) est fixé à un mur de bâtiment ou à un élément vertical (9),
- le dispositif de stationnement (2) comprenant un dispositif de retenue (4), dans lequel le dispositif de retenue (4) présente une pluralité d'évidements (8) dans lesquels peuvent être disposés les tubes de direction (6) des scooters (5), les évidements (8) présentant chacun une extension longitudinale (LA),
**caractérisée en ce que**, à l'état monté du dispositif de stationnement (2), l'extension longitudinale forme un angle aigu (α) par rapport à l'extension longitudinale (LT) du dispositif de support (3), et que
dans un procédé de rangement d'un scooter (5) dans un dispositif de parking (1), le scooter (5) est d'abord déplacé dans une direction oblique par rapport à l'extension longitudinale (LT) du dispositif de support (3) vers les évidements (8), puis le tube de direction (6) est basculé autour d'un axe de rotation (Da) disposé horizontalement dans les évidements (8).

2. Utilisation selon la revendication 1, l'angle (α) étant compris entre 20° et 70°, de préférence entre 30° et 60°, et de manière particulièrement préférée entre 40° et 50°.

3. Utilisation selon la revendication 1 ou 2, le dispositif de retenue (4) étant conçu comme partie intégrante du dispositif de support (3).

4. Utilisation selon l'une des revendications 1 à 3, le dispositif de retenue (4) comportant une pluralité d'éléments de retenue (11), l'évidement (8) étant formé par la zone entre les parois latérales (12) d'éléments de retenue (11) voisins.

5. Utilisation selon l'une des revendications 1 à 4, les éléments de retenue (11) étant arrondis dans la zone extérieure de l'évidement (8) ou étant réalisés sous la forme de surfaces polygonales qui se rapprochent d'un arrondi.

6. Utilisation selon l'une des revendications 1 à 5, les éléments de retenue (11) étant réalisés en forme de plaques, essentiellement en forme de losanges, en particulier en vue de dessus.

7. Utilisation selon l'une des revendications 1 à 6, les éléments de retenue (11) étant montés de manière coulissante le long de l'extension longitudinale (LT) du dispositif de support (3), l'extension transversale (QA) de l'évidement (8) étant modifiable.

8. Utilisation selon l'une des revendications 1 à 7, le dispositif de retenue (4) comportant, dans la zone des évidements (8) ou dans ceux-ci, des éléments de butée (13) pour maintenir le tube de direction (6) par complémentarité de forme et/ou par adhérence.

9. Utilisation selon la revendication 8, les éléments de butée (13) étant réalisés en forme de tenons.

10. Utilisation selon la revendication 8 ou 9, les éléments de butée (13) étant disposés, à l'état monté du dispositif de stationnement (2), par rapport à la verticale, selon un angle (β) compris entre 5° et 30°, de préférence entre 10° et 20°.

11. Utilisation selon l'une des revendications 8 à 10, les éléments de butée (13) d'éléments de retenue (11) voisins étant inclinés les uns par rapport aux autres et/ou faisant saillie dans un espace au-dessus ou au-dessous des évidements (8) .

12. Utilisation selon l'une des revendications 8 à 11, les éléments de butée (13) ayant une fonction d'amortissement, dans lequel les éléments de butée (13) sont de préférence formés d'un matériau élastique, de préférence du plastique.
